# EUROPÄISCHE PATENTANMELDUNG

(11) **EP 2 090 416 A1**
(43) Veröffentlichungstag der Anmeldung: **19.08.2009**
(21) Anmeldenummer: 08002553.9
(22) Anmeldetag: 12.02.2008
(51) Int. Cl.: B29C 43/18, B65D 41/00, B65D 53/06

(54) **Verfahren zur Herstellung eines Dosendeckels**

(71) Anmelder: Isensee, Till, 26209 Hatten (DE)
(72) Erfinder: Isensee, Till, 26209 Hatten (DE)
(74) Vertreter: Maiwald Patentanwalts GmbH

(57) **Zusammenfassung**

Die Erfindung betrifft Verfahren zur Herstellung eines Dosendeckels (1), der ein Dichtungselement (40) auf Polymerbasis umfasst, welches im Dosendeckel angeordnet ist, dass es im Schließzustand dichtend an der Öffnung des Dosenkörpers anliegt, bei dem ein Polymermaterial (50) durch Druck und/oder Erwärmung ausreichend fließfähig gemacht, im Bereich des zu erzeugenden Dichtungselementes auf den Dosendeckel aufgetragen und mechanisch in die gewünschte Form gebracht wird, die es nach Erkalten beibehält.

## Beschreibung

Die Erfindung betrifft ein Verfahren zur Herstellung eines Dosendeckels, z.B für sogenannte "easy opening" oder Open-Top oder Easy Peel Deckel, wobei ein Dichtungselement auf Polymerbasis im Schließzustand dichtend zwischen dem Doserumpf (Dosenfalz) und dem Dosendeckel angeordnet ist.

Die Erfindung betrifft weiterhin verfahrensgemäß herstellbare Dosendeckel und die Verwendung bestimmter Polymercompounds für die Erzeugung der genannten Dosendeckel.

Es ist seit langem bekannt, Dosen für Lebensmittel und dergleichen mit Deckeln zu verschließen, die durch Falzen fest mit dem Dosenkörper verbunden werden.

Zum Öffnen solcher Dosen wird der Dosendeckel zerstört, beispielsweise mittels eines Dosenöffners, einer "Ring-Pull"-Struktur oder dergleichen.

Der Falzbereich, durch den der Dosendeckel mit der Dose fest verbunden wird, umfasst gemäß dem Stand der Technik eine Polymerdichtung, üblicherweise basierend auf einem Kautschuklatex.

Üblicherweise wird die Dichtung im Dosendeckel erzeugt, bevor dieser dann an der Dose angebracht wird. Herkömmlich wird die Dichtung durch Einspritzen eines wasserbasierenden Kautschuklatex relativ geringer Viskosität, und nachfolgende Formgebung durch Drehen des Deckels und anschließenden Trocknen des Latex erzeugt.

Das Drehen des Deckels dient dazu, den flüssigen Latex gleichmäßig im Deckel zu verteilen und ihm auch die Form der späteren Dichtung zu geben.

Dieses Verfahren führt jedoch dazu, dass die Latexdichtung im wesentlichen am Außenrand des Deckels, nahe der beim Falzvorgang umzubiegenden Außenkante entsteht.

Das kann für bestimmte Anwendungen unerwünscht sein, bei denen es günstiger wäre, wenn die Dichtung näher zum Mittelpunkt des Deckels läge, wie im folgenden noch anhand der Zeichnungen beschrieben werden wird.

Es ist eine wesentliche Aufgabe der Erfindung, ein Verfahren anzugeben, das die Herstellung eines Dosendeckels der hier betroffenen Art ermöglicht, bei dem das Dichtungselement näher zur Mitte des Dosendeckels angeordnet sein kann.

Es gehört weiterhin zu den Aufgaben der Erfindung, einen entsprechenden Dosendeckel anzugeben. Außerdem umfasst die Erfindung die Verwendung besonders geeigneter Polymercompounds für die Erzeugung solcher Dosendeckel.

Die Erfindung löst diese Aufgabe mittels der in Anspruch 1 definierten Merkmalskombination.

Obwohl für Drehverschlüsse (Kronkorken, Schraubkappen) seit Jahrzehnten z.B. das als "SACMI-Verfahren" bekannte Prinzip eingesetzt wird, bei dem ein Polymercompound extrudiert und im Verschlussrohling durch Stempeln zur fertigen Dichtungseinlage geformt wird, hat die Industrie per dato für Dosendeckel keine vergleichbare Lösung gefunden.

Für die erfindungsgemäßen Verfahren eignen sich Latexmaterialien, sofern sie die erforderliche höhere Viskosität aufweisen.

Zudem eignen sich grundsätzlich (auch) solche Polymercompounds, die bisher schon Einsatz für kleine Gefäßverschlüsse der Art finden, wie sie in EP 0 503 124 beschrieben sind.

Für Dosendeckel kommt es besonders darauf an, eine ausreichende Fließfähigkeit des Polymermaterials bei der Herstellung des Dichtungselementes zu verbinden mit ausreichenden Dichtungseigenschaften im verschlossenen Zustand. Zudem wird aber gerade für die typischen Einsatzzwecke von Dosen (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100 °C eingesetzt; typische Sterilisierungsbedingungen sind 121 °C oder sogar 132 °C. Die erfindungsgemäß zu verwendenden Polymermaterialien sind in der Art maßgeschneidert, dass sie einerseits während des Pasteurisations- und Heißfüllprozess und andererseits im Sterilisationsprozess ihre Dichtungswirkung im nötigen Umfang beibehalten.

Außerdem lassen sich nicht alle Compounds der in EP 0 503 124 beschriebenen Art ohne weiteres für Dosendeckel einsetzen. Obwohl in EP 0 503 124 angegeben ist, dass sich die dort beschriebenen Compounds für verschiedenste Gefäßverschlüsse eignen, ist dies oft nur der Fall, wenn die Verarbeitungseigenschaften entsprechend abgewandelt werden - insbesondere durch den Zusatz von Strecköl, um die Fließfähigkeit zu verbessern. Das ist bei Dosen nicht erwünscht, z.B. im Hinblick auf die Gefahr der Migration von Compound-Bestandteilen in fetthaltige Nahrungsmittel - vergleiche unsere parallele europäische Patentanmeldung mit dem Titel "Migrationsverhindernde Polymercompounds" vom 9. November 2007.

Grundsätzlich wird gemäß dem erfindungsgemäßen Herstellungsverfahren von einem Dosendeckel-Rohling aus Metall ausgegangen, der eine Innenbeschichtung z.B. auf Polymerbasis tragen kann.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100 °C und 260 °C vorgelegt wird.

Das Material wird in den Randbereich des Rohlings etwa an der gleichen Stelle eingebracht, wo beim Stand der Technik das Latexmaterial appliziert wird.

Nachfolgend wird das kreisscheibenförmige Dichtungselement aus dem extrudierten, noch fließfähigen Material durch entsprechende Stempelung (analog dem bekannten SACMI-Verfahren) geformt.

Für eine solche Auftragung eignet sich beispielsweise grundsätzlich das Verfahren, das in US 5,763,004 geschrieben worden ist. Hierbei wird ein ringförmiger Auftrag mittels einer entsprechenden ringförmigen Anordnung von Auftragungsdüsen bewirkt. Hieran kann sich ein geeigneter Formgebungsschritt durch Stempelung oder dergleichen anschließen.

Das erfindungsgemäße Verfahren hat, wie ersichtlich, gegenüber dem bekannten Verfahren den weiteren Vorteil, dass die Dichtungseinlage durch die Formgebung (stempeln) bereits völlig fertig gestellt werden kann und nicht, wie beim Einspritzen von Kautschuklatex, eine anschließende Aushärtung im Ofen erforderlich ist.

Für das erfindungsgemäße Verfahren ist es wichtig, dass verwendbare Materialien eine für den Eintrag in den Rohling und die nachfolgende Ausbildung der Endform der Dichtung geeignete Viskosität aufweisen. Die Viskosität muss niedrig genug sein, damit das Material durch Extrusion oder dergleichen schnell genug, bei richtiger Dosierung eingebracht und gestempelt werden kann. Andererseits muss die Viskosität groß genug sein, damit die durch die Stempel erzeugte Form nach dem Entfernen des Stempels bestehen bleibt (das Material also nicht mehr so sehr fließt, dass die Form der Dichtung beeinträchtigt würde).

Das lässt sich bei einem Material, das grundsätzlich viskoser ist als die bekannten wasserbasierenden Kautschuklatices, z.B. durch höhere Extrusionsdrücke und/oder -temperaturen erreichen.

Bevorzugte Ausführungsformen der Erfindung werden nachfolgend unter Bezugnahme auf die beigefügten Zeichnungen näher erläutert.

Darin zeigen:
- Figur 1: einen herkömmlichen Dosendeckel,
- Figur 2: eine erste Ausführungsform der Erfindung mit noch nicht gestempeltem Dichtungsmaterial, und
- Figur 3: diese Ausführungsform der Erfindung nach dem Stempeln.

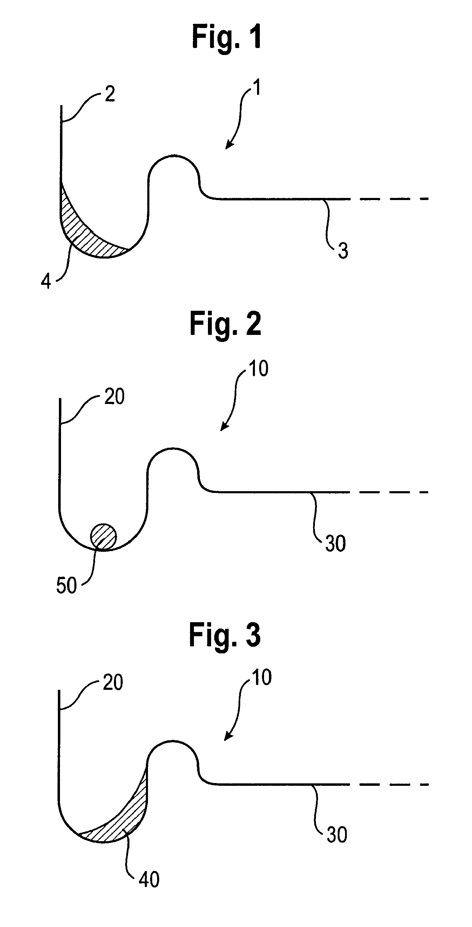

Der in Figur 1 schematisch gezeigte bekannt Dosendeckel (1) hat einen Mittelbereich (3), der von einem Falzbereich (2) umgeben ist. Die freie Endkante des Falzbereichs (2) dient zur Ausbildung des Falzes, mit dem der Dosendeckel mit der Dose dichtend verbunden wird.

In Figur 1 (wie auch in den übrigen Figuren) ist der Dosendeckel (1) in einer, gegenüber der angebrachten Stellung um 180° gedrehten Stellung gezeigt, so dass sein Falzbereich nach oben zeigt.

In dieser Stellung wird im Stand der Technik die Dichtungsmasse in den Rohling eingebracht. Sie besteht beim Einbringen aus einem wasserbasierten relativ nieder-viskosen Kautschuklatex. Wird der Rohling (1) um seine Mitte gedreht, wird durch die Einwirkung der Zentrifugalkraft die nieder-viskose Latexmasse nach außen gedrängt und wandert dabei an der Innenseite des Falzbereichs (2) hoch. Unter Trocknungsbedingungen verfestigt sich die Latexmasse und behält die so eingenommene Form bei, wie bei (4) in Figur 1 gezeigt.

Wird dieser bekannte Dosendeckel auf der Dose angebracht und durch Falzen mit ihr verbunden, sitzt die Dichtungsmasse daher an der Außenseite der Falzdichtung.

Bei der in Figur 2 gezeigten Ausführungsform der Erfindung wird ein Deckelrohling (10) verwendet, der dem Deckelrohling (1) gemäß Figur 1 entspricht. Auch hier gibt es einen Innenbereich (30), der beim späteren Öffnen der Dose mittels eines Dosenöffners, einer Ring-Pull-Einrichtung oder dergleichen bereichsweise entfernt würde, um den Inhalt der Dose zugänglich zu machen, und einen Falzbereich (20), der der Anbringung des Dosendeckels auf dem Körper der Dose dient.

Figur 2 zeigt den Rohling nach Einbringung eines ringförmigen Stranges aus Polymermaterial (50). Das Material hat, bei der in Figur 2 gezeigten Verfahrensstufe, noch eine ausreichende Fließfähigkeit, um durch Stempelung verformt zu werden. Es kann zu diesem Zweck bei erhöhter Temperatur durch Extrusion eingebracht worden sein und eine ausreichende Resttemperatur aufweisen.

In Figur 3 ist, ausgehend von der in Figur 2 gezeigten Situation, der Deckelrohling gezeigt, bei dem durch Stempelung die Dichtungsmasse (50) bereits zur Dichtung (40) verformt worden ist.

Da hier eine Stempelung eingesetzt wird, ist es möglich, durch geeignete Formgebung des Stempels auszuwählen, welche Form die Dichtung aufweisen soll. Sie könnte natürlich der in Figur 1 gezeigten Dichtung (4) entsprechen.

Sie kann aber bevorzugt die in Figur 3 gezeigte Form aufweisen, bei der sich die Dichtungsmasse von dem Falzbereich (20) weg in Richtung zum Innenbereich (30) des Rohlings (10) erstreckt.

Ein so ausgebildeter Dosendeckel würde es ermöglichen, dass nach dem Anbringen auf der Dose die Dichtung eher auf der Innenseite des Deckels sitzt, was für viele Anwendungszwecke vorteilhaft ist.

Für die Realisierung der Erfindung eignen sich neben den schon genannten bekannten Compounds auch solche auf der Basis von thermoplastischen Elastomeren, beispielsweise gemäß folgender Rezeptur:
Polyolefin vorzugsweise lineares Polyethylen niedriger Dichte (z.B. von SABIC): 40-50 kg;
Styrol-Ethylen/Butylen-Styrol Block-Copolymer (z.B. Kraton G Serie): 15-25 kg
Polyolefin vorzugsweise: Polyethylen/Polypropylen Copolymer (z.B. ADFLEX Serie): 5-10 kg Medizinisches Weißöl (Viskosität 70 cSt): 20-30 kg
Erucasäureamid (Kemamide E): 0,25-0,5 kg
Ölsäureamid (ARMOSLIP CPA): 0,25-0,5 kg
Antioxidanz (IRGANOX 1010): 0,05-0,15 kg
Stabilisator (IRGAFOS 168): 0,05-0,15 kg
Pigment: 0,2-0,7 kg

Will man die Verwendung von Strecköl vermeiden, eignen sich besonders gut solche Compounds, wie in unserer parallelen europäischen Patentanmeldung mit dem Titel "Migrationsverhindernde Polymercompounds" beschrieben.

Es hat sich herausgestellt, dass sich hierfür besonders gut ein Copolymer eignet, das einerseits Polyethyleneinheiten umfasst, und andererseits aus einem Alken-Monomeren aufgebaut worden ist, welches aus Propen, Buten, Hexen und (insbesondere) Okten ausgewählt worden ist.

Solche Copolymere lassen sich mittels Metallocen-Katalysatoren gezielt mit den gewünschten physikalischen Eigenschaften erzeugen.

Vorzugsweise hat das genannte Material eine Shore A Härte von 40-90 und insbesondere eine Härte von 60-75. Der Druckverformungsrest bestimmt nach ASTM ... (70°C, 22h, 25% Kompression) liegt vorzugsweise in einem Bereich von 30-70% und besonders bevorzugt zwischen 30 und 50%.

Geeignete Polymere sind in EP 0 714 426 beschrieben. Dort wird angegeben, dass sich diese Polymere als solche auch zu Dichtungseinlagen verarbeiten lassen, wobei keinerlei Zusätze erfolgen sollen (S. 2, Z. 26 - 28). Das Problem der Migration von Materialbestandteilen wird hier nicht angesprochen.

Eine beispielhafte Rezeptur umfasst:

| | |
|---|---|
| Ethylen-Okten-Copolymer mit den o.g. Eigenschaften: | 45% |
| EVA (14%VA): | 40% |
| Hochfliessfähiges PP: | 14% |
| Stabilisatoren (Irganox 1010, Irgafos 168): | 0,2% |
| Gleitmittel (Erucasäureamid): | 0,2% |
| Gleitmittel (Ölsäureamid): | 0,2% |
| Pigment: | 0,4% |

Für den jeweiligen konkreten Verwendungszweck kann das Compound hinsichtlich Shore-Härte, Elastizitätsmodul, rheologischen Eigenschaften und dergleichen durch im Stand der Technik bekannte Maßnahmen eingestellt werden.

## Patentansprüche

1. Verfahren zur Herstellung eines Dosendeckels, der ein Dichtungselement auf Polymerbasis umfasst, welches im Dosendeckel angeordnet ist, dass es im Schließzustand dichtend an der Öffnung des Dosenkörpers anliegt, bei dem ein Polymermaterial durch Druck und/oder Erwärmung ausreichend fließfähig gemacht, im Bereich des zu erzeugenden Dichtungselementes auf den Dosendeckel aufgetragen und mechanisch in die gewünschte Form gebracht wird, die es nach Erkalten beibehält.

2. Verfahren nach einem der vorstehenden Ansprüche, **dadurch gekennzeichnet, dass** das Dichtungselement als Inneneinlage auf der Innenfläche des Dosendeckels ausgebildet ist.

3. Verfahren nach Anspruch 2, **dadurch gekennzeichnet, dass** das Dichtungselement ringförmig ausgebildet ist.

4. Verfahren nach einem der vorstehenden Ansprüche, **dadurch gekennzeichnet, dass** das Dichtungselement aus einem Polymer oder Polymercompound besteht.

5. Verfahren nach einem der vorstehenden Ansprüche, **dadurch gekennzeichnet, dass** das Polymercompound so ausgebildet ist, dass das Dichtungselement unter Pasteurisationsbedingungen (bei bis zu 98 °C) einsetzbar ist.

6. Verfahren nach einem der vorstehenden Ansprüche, **dadurch gekennzeichnet, dass** das Polymercompound so ausgebildet ist, dass das Dichtungselement unter Sterilisierungsbedingungen (bei 121 °C, vorzugsweise bei 132 °C) einsetzbar ist.

7. Verfahren nach einem der vorstehenden Ansprüche, bei dem das Polymermaterial als Granulat bereitgestellt und mittels eines Extruders erwärmt wird.

8. Verfahren nach einem der vorstehenden Ansprüche, bei dem das fließfähige Polymermaterial aus einer Düse innenseitig auf den Dosendeckel aufgetragen wird.

9. Verfahren nach Anspruch 7 oder Anspruch 8, bei dem das aufgetragene Polymermaterial mittels eines Stempels oder dergleichen geformt wird.

10. Verfahren nach einem der vorstehenden Ansprüche, bei dem das Dichtungselement (40) in einem fertig geformten Deckelrohling (10) durch Stempelung ausgebildet wird.

11. Dosendeckel, herstellbar mittels des Verfahrens gemäß einem der vorstehenden Ansprüche.

12. Verwendung eines thermoplastischen Materials, das wenigstens ein (Co-)Polymer umfasst, zur Herstellung des Dichtungselements eines Dosendeckels, gemäß einem der Ansprüche 1 bis 10.

13. Verwendung nach Anspruch 12, **dadurch gekennzeichnet, dass** das Material wenigstens eine Poly(alkylen)komponente umfasst.

14. Verwendung nach Anspruch 13, **dadurch gekennzeichnet, dass** das Material ein Co-Polymer ist, das Polyethylen und ein Alken, insbesondere ausgewählt aus Propen, Buten, Hexen und Okten, und besonders bevorzugt Okten, umfasst.
